# EUROPEAN PATENT APPLICATION

(11) **EP 4 620 358 A1**
(43) Date of publication of application: **24.09.2025**
(21) Application number: 23927178.6
(22) Date of filing: 04.12.2023
(51) Int. Cl.: A47J 31/46, A47J 31/44

(54) **BOILER MULTI-HEATING AND PRESSURE-VARIATION SYSTEM FOR COFFEE MACHINE**

(30) Priority: 10.03.2023 CN 202310225188
(71) Applicant: Guangdong Gemilai Intelligent Technology Co., Ltd., Foshan, Guangdong 528300 (CN)
(72) Inventor: WANG, Jing, Foshan, Guangdong 528300 (CN); ZHU, Wenjing, Foshan, Guangdong 528300 (CN); XIE, Jianping, Foshan, Guangdong 528300 (CN)
(74) Representative: Lin Chien, Mon-Yin
(86) International application number: PCT/CN2023/136153
(87) International publication number: WO 2024/187837

(57) **Abstract**

The present disclosure relates to the technical field of commercial coffee machines and discloses a boiler multi-heating and pressure-variation system for a coffee machine, including a heater, a brewing head mounted on the heater, and a sub and main boiler system connected to the heater via pipelines. A water inlet end of the sub and main boiler system is connected to a pressure regulating valve by a water pipe. The pressure regulating valve performs regulation by a stepper motor and is used to regulate the pressure of pressurized water in the pipeline. The present disclosure connects the stepper motor to the pressure regulating valve, where the stepper motor drives a sliding block to move, enabling the pressure regulating valve to vary the pipeline pressure, thus allowing the preparation of coffee with different flavors as needed.

## Description

### TECHNICAL FIELD

The present disclosure relates to the technical field of commercial coffee machines, specifically a boiler multi-heating and pressure-variation system for a coffee machine.

### BACKGROUND

Commercial coffee machines are devices for brewing coffee. The working principle of existing dual-boiler coffee machines involves one sub-boiler providing hot water for brewing coffee, while another main boiler generates steam, thereby enhancing continuous output capability.

### SUMMARY

### Technical Problem

Existing dual-boiler coffee machines have two methods for adjusting water output pressure: one uses a DC variable-frequency water pump to alter water flow by changing rotation speed, thereby adjusting pressure; the other manually adjusts a pressure regulating valve to change water flow and pressure. The first method with a DC variable-frequency pump is costly, while the second manual adjustment lacks stability and precision.

### Technical Solution

An object of the present disclosure is to address the technical issue of unadjustable water output pressure in existing coffee machines, providing a boiler multi-heating and pressure-variation system for a coffee machine.

To achieve this object, the present disclosure adopts the following technical solutions:
A boiler multi-heating and pressure-variation system for a coffee machine comprises a heater, a brewing head mounted on the heater, and a sub and main boiler system connected to the heater via pipelines. A water inlet end of the sub and main boiler system is connected to a pressure regulating valve through a water pipe. The pressure regulating valve is adjusted by a stepper motor and is used to regulate the pressure of pressurized water in the pipeline.

Furthermore, the pressure regulating valve is equipped with a water inlet, a water outlet, and a pressure relief port. The water inlet is connected to a check valve via a water pipe, the water inlet end of the check valve is connected to the water outlet end of a water pump through a water pipe, the water inlet end of the water pump is connected to a water inlet valve, and the water inlet valve is connected to a water source. The pressure relief port of the pressure regulating valve is connected to a water outlet end of the water inlet valve via a water pipe. The sub and main boiler system comprises a sub-boiler and a main boiler that supplies heating steam to the sub-boiler. A water outlet of the pressure regulating valve splits into two branches via a water pipe, with one branch connected to a horizontal water inlet end of the heater and the other connected to a water inlet end of the sub-boiler. Thus, the pressure-regulated water is supplied to both the sub-boiler and the heater.

Furthermore, the pressure regulating valve comprises a pressure regulating valve body, inside which a horizontally arranged valve chamber is provided. The lower side of the valve chamber is equipped with a water inlet hole connected to the water inlet, while the upper side has a water outlet hole connected to the water outlet, with the water outlet hole and the water inlet hole arranged opposite each other and being interconnected. A sliding block is movably connected within the valve chamber, and the right end of the valve chamber features a pressure relief hole connected to the pressure relief port. The sliding block forms a seal with the inner wall of the valve chamber. The output shaft of the stepper motor is fixedly connected to a lead screw, which engages with the left end of the sliding block via threads, enabling the stepper motor to rotate and drive the sliding block left or right. The right end of the sliding block is fixedly connected to a pressure regulating column, which extends between the water inlet hole and the water outlet hole to regulate the water pressure passing through them. The right end of the pressure regulating column is fixedly connected to an adjustment needle. When the adjustment needle moves rightward into the pressure relief hole, the gap between the needle and the pressure relief hole is small, preventing pressure relief. When the adjustment needle moves leftward and disengages from the pressure relief hole, water flows into the pressure relief hole to relieve pressure. The stepper motor drives the lead screw to rotate, moving the sliding block left or right, thereby adjusting the passage area between the water inlet hole and the water outlet hole and regulating the outlet water pressure.

Furthermore, the valve chamber contains a compression spring, with one end pressing against the right end of the sliding block and the other end pressing against the inner wall of the valve chamber, providing a leftward elastic force to the sliding block.

Furthermore, the outer wall of the sliding block is grooved with a circular sealing groove, inside which a sealing ring is placed, ensuring a seal between the outer wall of the sliding block and the inner wall of the valve chamber.

Furthermore, the check valve is used to supply water unidirectionally from the water pump to the pressure regulating valve, and the water outlet end of the check valve is connected to the water inlet end of the main boiler via a water pipe branch.

Furthermore, the water outlet end of the sub-boiler is connected to the lower water inlet end of the heater via a water pipe.

### Beneficial Effects

The multi-heating and pressure-varying system for a coffee machine boiler provided by the present disclosure offers the following benefits: By connecting the stepper motor to the pressure regulating valve, the stepper motor drives the sliding block to move, enabling the pressure regulating valve to vary the pressure in the pipeline. A pressure sensor in the pipeline transmits pressure signals to the chip based on preset pressure curve parameters, and the chip instructs the stepper motor to rotate, achieving the desired pressure. This facilitates the preparation of coffee with different flavors as needed.

### BRIEF DESCRIPTION OF DRAWINGS

The specific embodiments of the present disclosure are further described in detail below with reference to the accompanying drawings:
FIG. 1 is a schematic diagram of the pipeline system for the multi-heating and pressure-varying system of a coffee machine boiler provided by the present disclosure;
FIG. 2 is a structural schematic diagram of the pressure regulating valve in the present disclosure.

Reference signs: 1. Heater; 2. Brewing head; 3. Sub-boiler; 4. Main boiler; 5. Pressure regulating valve; 51. Water inlet; 52. Water outlet; 53. Pressure relief port; 54. Pressure regulating valve body; 541. Valve chamber; 542. Water inlet hole; 543. Water outlet hole; 544. Pressure relief hole; 55. Sliding block; 56. Pressure regulating column; 57. Adjustment needle; 58. Compression spring; 59. Sealing ring; 6. Stepper motor; 61. Lead screw; 7. Check valve; 8. Water pump; 9. Water inlet valve.

### DESCRIPTION OF EMBODIMENTS

It should be understood that the specific embodiments described herein are only intended to explain, rather than to limit the present disclosure.

The technical solutions in the embodiments of the present disclosure will be clearly and completely described below with reference to the accompanying drawings. Obviously, the described embodiments are only a part of the embodiments of the present disclosure, not all of them. Based on the embodiments of the present disclosure, all other embodiments obtained by ordinary skill in the art without creative effort shall fall within the protection scope of the present disclosure.

It should be noted that all directional indications (such as up, down, left, right, front, back, etc.) in the embodiments of the present disclosure are only used to explain the relative positional relationships and movements of components under a specific posture (as shown in the drawings). If the specific posture changes, the directional indications will change accordingly. The connections described may be direct or indirect.

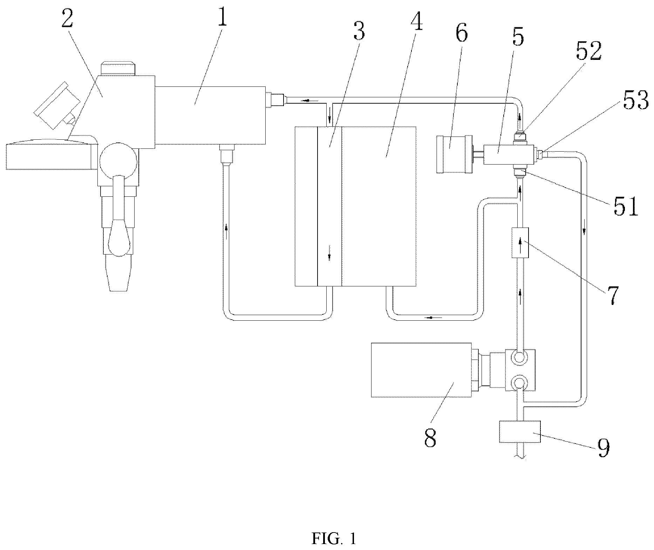

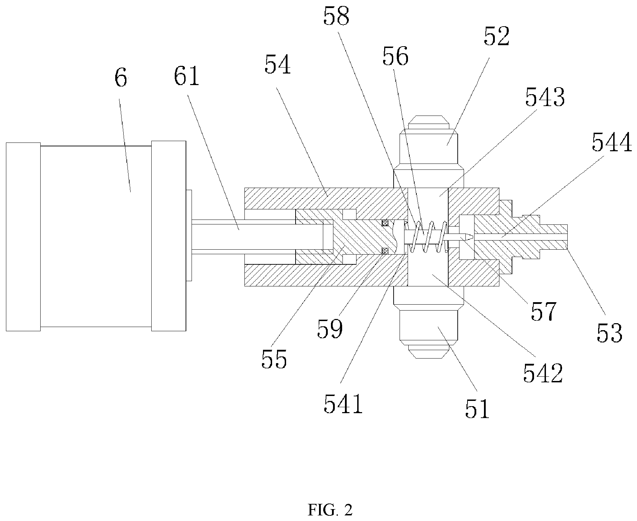

As shown in FIGS. 1-2, a multi-heating and pressure-variation system for a coffee machine boiler includes a heater 1, a brewing head 2 installed on the heater 1, and a sub and main boiler system connected to the heater 1 via pipelines. The water inlet end of the sub and main boiler system is connected to a pressure regulating valve 5 through a water pipe, which is adjusted by a stepper motor 6. The pressure regulating valve 5 is used to regulate the pressure of the pressurized water in the pipelines. The brewing head 2 and the sub and main boiler system form a loop through pipeline connections, enabling heat exchange. The heater 1 is equipped with a temperature sensor to adjust the temperature of the brewing head 2, ensuring stable coffee temperature. By connecting the stepper motor 6 to the pressure regulating valve 5, the stepper motor 6 drives the sliding block 55 to move, allowing the pressure regulating valve 5 to implement variable pressure in the pipelines. The control program on the device's power board controls the stepper motor 6 to rotate according to the pressure curve, thereby producing coffee with different flavors.

In the present disclosure, the pressure regulating valve 5 is provided with a water inlet 51, a water outlet 52, and a pressure relief port 53. The water inlet 51 is connected to a check valve 7 via a water pipe, and the water inlet end of the check valve 7 is connected to the water outlet end of a water pump 8 through a water pipe. The water inlet end of the water pump 8 is connected to a water inlet valve 9, which is linked to the water source. The pressure relief port 53 of the pressure regulating valve 5 is connected to the water outlet end of the water inlet valve 9 via a water pipe. The sub and main boiler system includes a sub-boiler 3 and a main boiler 4 that supplies heating steam to the sub-boiler 3. The water outlet 52 of the pressure regulating valve 5 splits into two branches via a water pipe, with one branch connected to the horizontal water inlet end of the heater 1 and the other connected to the water inlet end of the sub-boiler 3. The check valve 7 is used to supply water unidirectionally from the water pump 8 to the pressure regulating valve 5, and its water outlet end is connected to the water inlet end of the main boiler 4 via a water pipe branch. The water outlet end of the sub-boiler 3 is connected to the lower water inlet end of the heater 1 through a water pipe. Thus, the pressure-regulated water from the pressure regulating valve 5 supplies water to both the sub-boiler 3 and the heater 1.

In the present disclosure, the pressure regulating valve 5 comprises a pressure regulating valve body, which is provided with a transversely arranged valve chamber 541. The lower side of the valve chamber 541 is provided with a water inlet hole 542 connected to the water inlet 51, and the upper side of the valve chamber 541 is provided with a water outlet hole 543 connected to the water outlet 52. The water outlet hole 543 and the water inlet hole 542 are oppositely and interconnected. A sliding block 55 is slidably connected within the valve chamber 541, and the right end of the valve chamber 541 is provided with a pressure relief hole 544 connected to the pressure relief port 53. The sliding block 55 is sealed against the inner wall of the valve chamber 541. The output shaft of the stepper motor 6 is fixedly connected to a lead screw 61, which is threadedly engaged with the left end of the sliding block 55, enabling the stepper motor 6 to rotate and drive the sliding block 55 to move left and right. The right end of the sliding block 55 is fixedly connected to a pressure regulating column 56, which extends between the water inlet hole 542 and the water outlet hole 543 to regulate the water pressure passing through them. The right end of the pressure regulating column 56 is fixedly connected to an adjustment needle 57, which cooperates with the pressure relief hole 544. When the adjustment needle 57 disengages from the pressure relief hole 544, water flows into the pressure relief hole 544 to relieve pressure. The stepper motor 6 drives the lead screw 61 to rotate, which in turn drives the sliding block 55 to move left and right, thereby moving the pressure regulating column 56 left and right. This adjusts the flow area between the water inlet hole 542 and the water outlet hole 543, regulating the water flow rate to achieve pressure variation.

### Embodiments of the Present Disclosure

In the present disclosure, the valve chamber 541 is provided with a compression spring 58. One end of the compression spring 58 abuts against the right end of the sliding block 55, and the other end abuts against the inner wall of the valve chamber 541. The compression spring 58 provides an elastic force to push the sliding block 55 leftward.

In the present disclosure, the outer wall of the sliding block 55 is provided with a circular sealing groove, which houses a sealing ring 59. The sealing ring 59 seals the gap between the outer wall of the sliding block 55 and the inner wall of the valve chamber 541.

Parts not covered in this technical solution can be implemented using existing technologies.

The above displays and describes the fundamental principles, main features, and characteristics of the present disclosure. Professionals in this field should understand that the present disclosure is not limited by the aforementioned embodiments, which are merely illustrative of the principles of the present disclosure. Without departing from the spirit and scope of the present disclosure, various modifications and improvements may be made, all of which fall within the claimed scope of the present disclosure. The scope of protection sought by the present disclosure is defined by the appended claims and their equivalents.

## Claims

1. A boiler multi-heating and pressure-variation system for a coffee machine, comprising a heater (1), a brewing head (2) mounted on the heater (1), and a sub and main boiler system connected to the heater (1) via a pipeline, **characterized in that** a water inlet end of the sub and main boiler system is connected to a pressure regulating valve (5) via a water pipe, the pressure regulating valve (5) is adjusted by a stepper motor (6), and the pressure regulating valve (5) is used to regulate a pressure of water in the pipeline; and the pressure regulating valve (5) is equipped with a water inlet (51), a water outlet (52), and a pressure relief port (53), the water inlet (51) is connected to a check valve (7) via a water pipe, a water inlet end of the check valve (7) is connected to a water outlet end of a water pump (8) via a water pipe, a water inlet end of the water pump (8) is connected to a water inlet valve (9), and the water inlet valve (9) is connected to a water source; and the pressure relief port (53) of the pressure regulating valve (5) is connected to a water outlet end of the water inlet valve (9) via a water pipe; and the sub and main boiler system comprises a sub-boiler (3) and a main boiler (4) that supplies heating steam to the sub-boiler (3); and the water outlet (52) of the pressure regulating valve (5) is split into two branches via a water pipe, with one branch connected to a horizontal water inlet end of the heater (1) and the other branch connected to a water inlet end of the sub-boiler (3).

2. The boiler multi-heating and pressure-variation system for a coffee machine according to claim 1, **characterized in that** the pressure regulating valve (5) comprises a pressure regulating valve body, inside which a horizontally arranged valve chamber (541) is provided, wherein a lower side of the valve chamber (541) is equipped with a water inlet hole (542) connected to the water inlet (51), while an upper side of the valve chamber (541) is equipped with a water outlet hole (543) connected to the water outlet (52), with the water outlet hole (543) and the water inlet hole (542) arranged opposite and interconnected; and a sliding block (55) is slidably connected within the valve chamber (541), a right end of the valve chamber (541) is equipped with a pressure relief hole (544) connected to the pressure relief port (53), and the sliding block (55) is sealed against an inner wall of the valve chamber (541); and an output shaft of the stepper motor (6) is fixedly connected to a lead screw (61), which is threadedly engaged with a left end of the sliding block (55), enabling the stepper motor (6) to rotate and drive the sliding block (55) to move left or right; a right end of the sliding block (55) is fixedly connected to a pressure regulating column (56), which extends between the water inlet hole (542) and the water outlet hole (543) to regulate a water pressure passing through the water inlet hole (542) and the water outlet hole (543); and a right end of the pressure regulating column (56) is fixedly connected to an adjustment needle (57), and when the adjustment needle (57) moves left and disengages from the pressure relief hole (544), water flows into the pressure relief hole (544) to relieve pressure.

3. The boiler multi-heating and pressure-variation system for a coffee machine according to claim 2, **characterized in that** the valve chamber (541) is equipped with a compression spring (58), wherein one end of the compression spring (58) abuts against the right end of the sliding block (55), while the other end abuts against the inner wall of the valve chamber (541), and the compression spring (58) provides an elastic force to push the sliding block (55) leftward.

4. The boiler multi-heating and pressure-variation system for a coffee machine according to claim 2, **characterized in that** an outer wall of the sliding block (55) is equipped with a circular sealing groove, inside which a sealing ring (59) is provided, wherein the sealing ring (59) seals a gap between the outer wall of the sliding block (55) and the inner wall of the valve chamber (541).

5. The boiler multi-heating and pressure-variation system for a coffee machine according to claim 2, **characterized in that** the check valve (7) is configured to supply water unidirectionally from the water pump (8) to the pressure regulating valve (5), wherein a water outlet end of the check valve (7) is connected to a water inlet end of the main boiler (4) via a water pipe branch.

6. The boiler multi-heating and pressure-variation system for a coffee machine according to claim 2, **characterized in that** a water outlet end of the sub-boiler (3) is connected to a water inlet end at a lower part of the heater (1) via a water pipe.
